# EUROPEAN PATENT APPLICATION

(11) **EP 2 264 581 A1**
(43) Date of publication of application: **22.12.2010**
(21) Application number: 10165556.1
(22) Date of filing: 10.06.2010
(51) Int. Cl.: G06F 3/048

(54) **Methods for browsing image data and systems using the same**

(30) Priority: 11.06.2009 TW 98119504
(71) Applicant: HTC Corporation, Taoyuan County 330 (TW)
(72) Inventor: Luke, Hok-sum H, 330, Taoyuan City, Taoyuan County (TW); Bamford, Drew, Bellevue, WA 98005 (US); Gerhardt, Michael, Bellevue, WA 98005 (US); Folchi, David, Bellevue, WA 98005 (US); Roberton, Nathan, Bellevue, WA 98005 (US); Van Tilburg, Martijn, Bellevue, WA 98005 (US)
(74) Representative: 2K Patentanwälte Blasberg Kewitz & Reichel

(57) **Abstract**

Methods for browsing image data and systems using the same are provided. First, a plurality of image data is provided. A thumbnail (A, B, C, D) is created for each of the image data, wherein the respective thumbnails have the same image height. Then, a filmstrip (310) is created according to the thumbnails, and all or a part of the filmstrip is displayed in a touch-sensitive display unit (300) to let users browse the thumbnails corresponding to the image data.

## Description

### CROSS REFERENCE TO RELATED APPLICATIONS

This Application claims priority of Taiwan Patent Application No. 098119504, filed on June 11, 2009, the entirety of which is incorporated by reference herein.

### BACKGROUND OF THE INVENTION

### FIELD OF THE INVENTION

The disclosure relates generally to methods for browsing image data and systems using the same, and, more particularly to methods that automatically create thumbnails with the same height for image data, and connect the thumbnails or use the thumbnails to create a filmstrip, thus to browse the image data, and systems using the same.

### DESCRIPTION OF THE RELATED ART

Recently, portable devices, such as handheld devices, have become more and more technically advanced and multifunctional. For example, a handheld device may have telecommunication capabilities, e-mail message capabilities, an advanced address book management system, a media playback system, and various other functions. Due to increased convenience and functions of the devices, these devices have become necessities of life.

Currently, a handheld device may be equipped with a touch-sensitive display unit. Users can directly perform related operations, such as application operations and data input via the touch-sensitive display unit. For example, a user can browse image data in the device via the touch-sensitive display unit. Generally, a browse manner, called grid view can be provided in the device to browse the image data. In some situations, the image data is cropped to obtain a representative grid figure, so as to be displayed in the corresponding grid. However, distortion may occur in the cropped image data, wherein users would be undetermined as to the complete picture of the image data from the cropped image data.

### BRIEF SUMMARY OF THE INVENTION

Methods for browsing image data and systems using the same are provided.

In an embodiment of a method for browsing image data, a plurality of image data is provided, and a thumbnail is created for each of the image data, wherein the respective thumbnails have the same image height. Then, a filmstrip is created according to the thumbnails, and all or a part of the filmstrip is displayed in a touch-sensitive display unit, such that the thumbnails corresponding to the image data are browsed.

An embodiment of a system for browsing image data includes a storage unit, a touch-sensitive display unit, and a processing unit. The storage unit includes a plurality of image data. The processing unit creates a thumbnail for each of the image data, wherein the respective thumbnails have the same image height. The processing unit creates a filmstrip according to the thumbnails, and displays all or a part of the filmstrip on the touch-sensitive display unit, such that the thumbnails corresponding to the image data are browsed.

In an embodiment of a method for browsing image data, a plurality of image data is provided, and a thumbnail is created for each of the image data, wherein the respective thumbnails have the same image height. Then, the thumbnails are connected, and all or a part of the connected thumbnails are displayed in a touch-sensitive display unit, such that the thumbnails corresponding to the image data are browsed.

An embodiment of a system for browsing image data includes a storage unit, a touch-sensitive display unit, and a processing unit. The storage unit includes a plurality of image data. The processing unit creates a thumbnail for each of the image data, wherein the respective thumbnails have the same image height. The processing unit connects the thumbnails, and displays all or a part of the connected thumbnails on the touch-sensitive display unit, such that the thumbnails corresponding to the image data are browsed.

In some embodiments, a selection corresponding to one of the thumbnails in the filmstrip is detected via the touch-sensitive display unit. When the selected thumbnail is displayed at the center of the touch-sensitive display unit, the image data corresponding to the selected thumbnail is displayed in the touch-sensitive display unit. When the selected thumbnail is not displayed at the center of the touch-sensitive display unit, the filmstrip is moved, such that the selected thumbnail is displayed at the center of the touch-sensitive display unit.

In some embodiments, a movement of an object near or on the touch-sensitive display unit is detected. In response to the movement, the filmstrip is moved, such that one of the thumbnails is displayed at the center of the touch-sensitive display unit.

In some embodiments, a specific image data is captured via an image capture unit, and a specific thumbnail is created for the specific image data. The specific thumbnail and the respective thumbnails have the same image height. Then, the specific thumbnail is connected after the last thumbnail in the filmstrip.

Methods for browsing image data and systems using the same may take the form of a program code embodied in a tangible media. When the program code is loaded into and executed by a machine, the machine becomes an apparatus for practicing the disclosed method.

### BRIEF DESCRIPTION OF the DRAWINGS

The invention will become more fully understood by referring to the following detailed description with reference to the accompanying drawings, wherein:

Fig. 1 is a schematic diagram illustrating an embodiment of a system for browsing image data of the invention;

Fig. 2 is a flowchart of an embodiment of a method for browsing image data of the invention;

Fig. 3 is a schematic diagram illustrating an embodiment of an example of a filmstrip of the invention;

Fig. 4 is a schematic diagram illustrating an embodiment of an example of filmstrip movement of the invention;

Fig. 5 is a schematic diagram illustrating another embodiment of an example of filmstrip movement of the invention;

Fig. 6 is a flowchart of an embodiment of a method for selecting thumbnails of the invention;

Figs. 7A and 7B are schematic diagrams illustrating an embodiment of an example of thumbnail selection of the invention;

Fig. 8 is a flowchart of an embodiment of a method for capturing and browsing image data of the invention; and

Figs. 9A and 9B are schematic diagrams illustrating an embodiment of an example of capture and browse for image data of the invention.

### DETAILED DESCRIPTION OF THE INVENTION

Methods for browsing image data and systems using the same are provided.

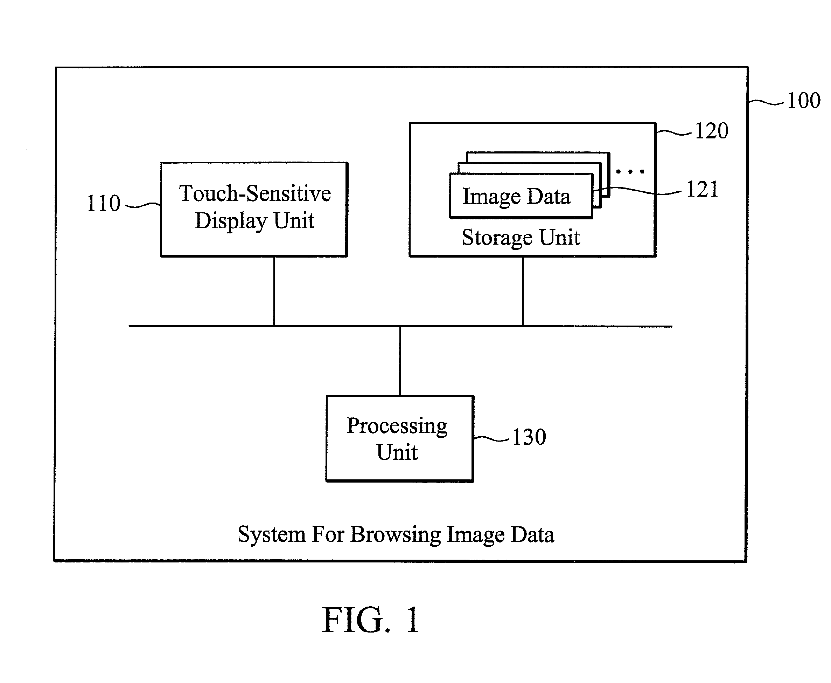

Fig. 1 is a schematic diagram illustrating an embodiment of a system for browsing image data of the invention. The system for browsing image data 100 can be used in an electronic device, such as a portable device comprising handheld devices such as a PDA (Personal Digital Assistant), a smart phone, a mobile phone, a MID (Mobile Internet Device, MID), and a Netbook.

The system for browsing image data 100 comprises a touch-sensitive display unit 110, a storage unit 120, and a processing unit 130. The touch-sensitive display unit 110 is a screen integrated with a touch-sensitive device (not shown). The touch-sensitive device has a touch-sensitive surface comprising sensors in at least one dimension to detect contact and movement of an input tool (object), such as a stylus or finger on the touch-sensitive surface. The touch-sensitive display unit 110 can display related data, and/or related figures and interfaces. The storage unit 120 comprises image data 121, which can be provided to the touch-sensitive display unit 110 for display. The image data 121 may comprise photos and/or videos. The processing unit 130 performs the method for browsing image data of the invention, which will be discussed further in the following paragraphs.

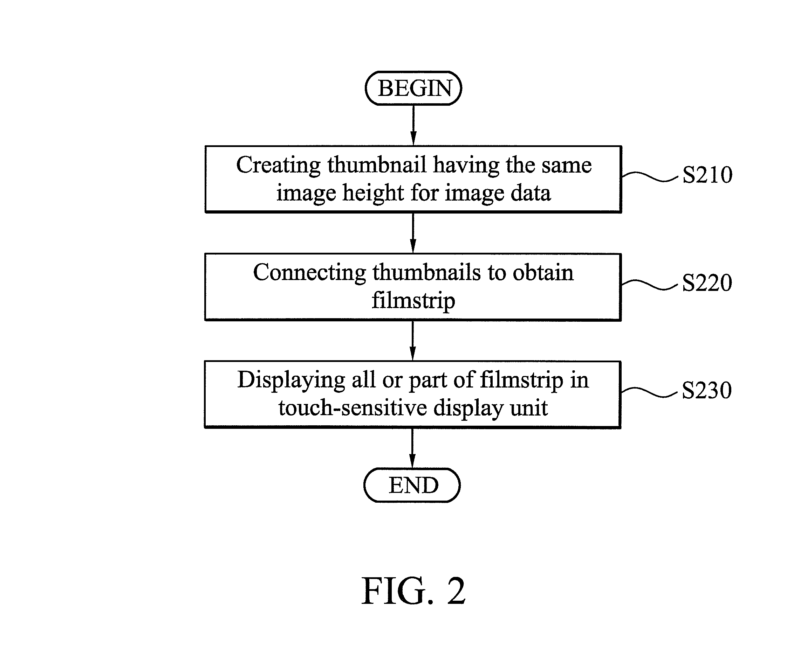

Fig. 2 is a flowchart of an embodiment of a method for browsing image data of the invention. The method for browsing image data can be used for an electronic device, such as a portable device comprising handheld devices such as a PDA, a smart phone, a mobile phone, a MID, and a Netbook.

In step S210, a thumbnail is created for each of the image data in the device, wherein the respective thumbnails have the same image height. It is understood that, during the creation of the thumbnail, the aspect ratio of the image data can be maintained. That is, the thumbnail and the corresponding image data have the same aspect ratio. In step S220, the thumbnails are connected to obtain a filmstrip. Then, in step S230, all or a part of the filmstrip is displayed in the touch-sensitive display unit, such that users can browse the thumbnails corresponding to the image data.

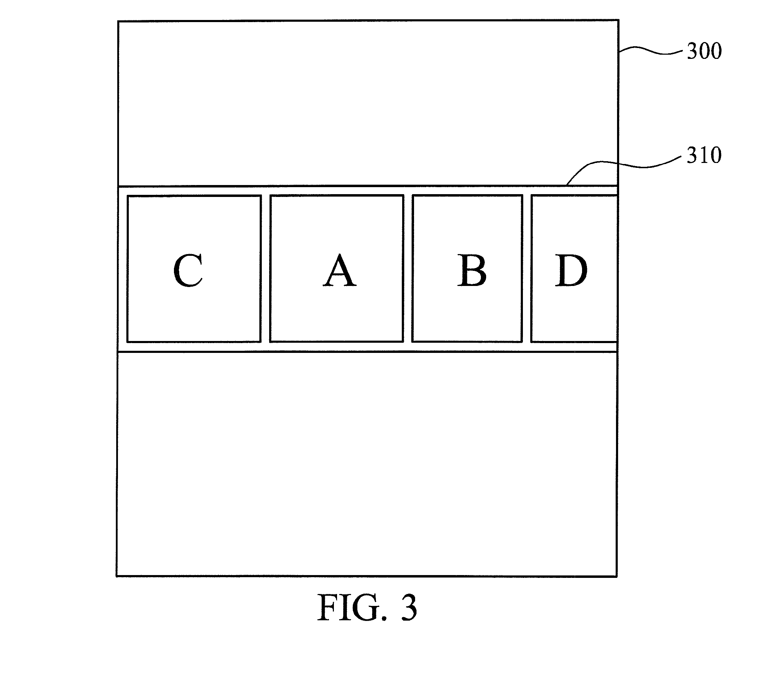

Fig. 3 is a schematic diagram illustrating an embodiment of an example of a filmstrip of the invention. As shown in Fig. 3, a filmstrip 310 is displayed in the touch-sensitive display unit 300. The filmstrip 310 is composed of several thumbnails, such as thumbnail C, thumbnail A, thumbnail B, and thumbnail D. It is noted that, thumbnail C, thumbnail A, thumbnail B, and thumbnail D have the same image height, but may have different image widths.

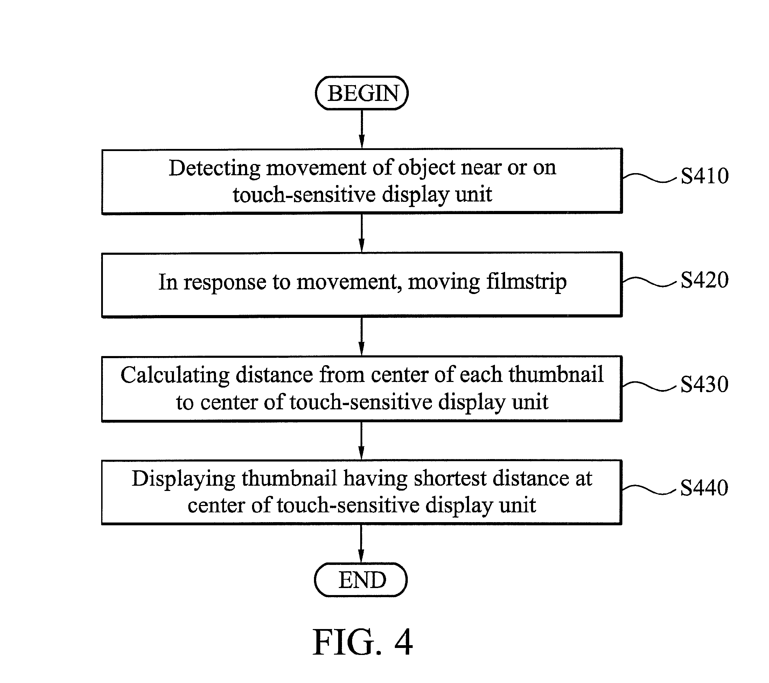

Fig. 4 is a schematic diagram illustrating an embodiment of an example of filmstrip movement of the invention.

In step S410, a movement of an object, such as a finger or a stylus near or on the touch-sensitive display unit is detected. In step S420, in response to the movement, the filmstrip is moved. It is understood that, in some embodiments, the distance and speed of the movement of the filmstrip can be determined according to the distance and speed of the movement of the object.

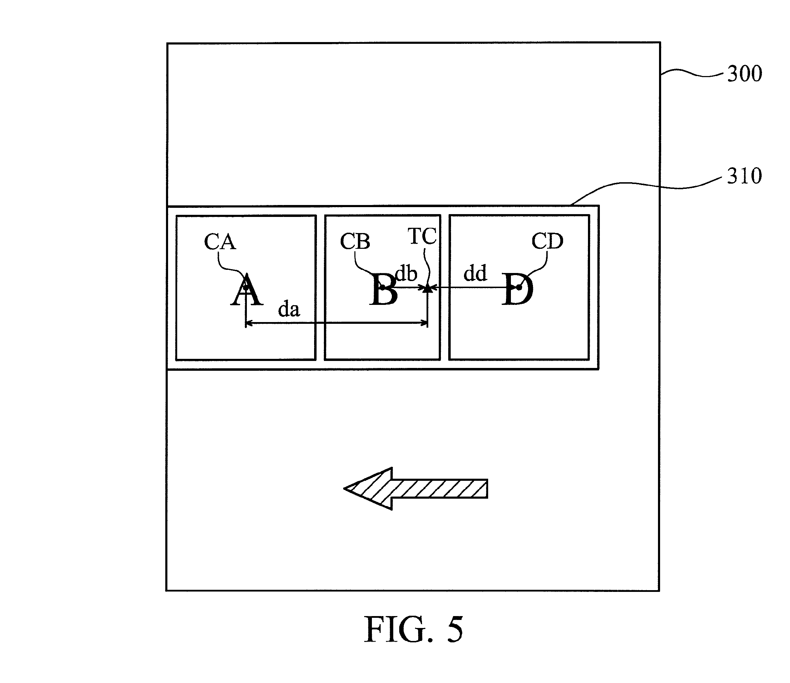

For example, the speed of the movement of the filmstrip may equal to the speed of the movement of the object, until, the speed of the movement of the filmstrip gradually decreases to zero. In step S430, a distance from the center of each of the thumbnails of the filmstrip to the center of the touch-sensitive display unit is calculated. It is understood that, in some embodiments, only the distances corresponding to the thumbnails displayed in the touch-sensitive display unit are calculated. In S440, the thumbnail having the shortest distance from its center to the center of the touch-sensitive display unit is moved to be displayed at the center of the touch-sensitive display unit. For example, when the object near or on the touch-sensitive display unit is moved from right to left, the filmstrip is moved from right to left until the speed of the movement of the filmstrip is zero, as shown in Fig. 5. In Fig. 5, CA is the center of thumbnail A, CB is the center of thumbnail B, CD is the center of thumbnail D, and TC is the center of the touch-sensitive display unit. Further, da is the distance from the center of thumbnail A to the center of the touch-sensitive display unit, db is the distance from the center of thumbnail B to the center of the touch-sensitive display unit, and dd is the distance from the center of thumbnail D to the center of the touch-sensitive display unit. Since db<dd and db<da, thumbnail B will be displayed at the center of the touch-sensitive display unit.

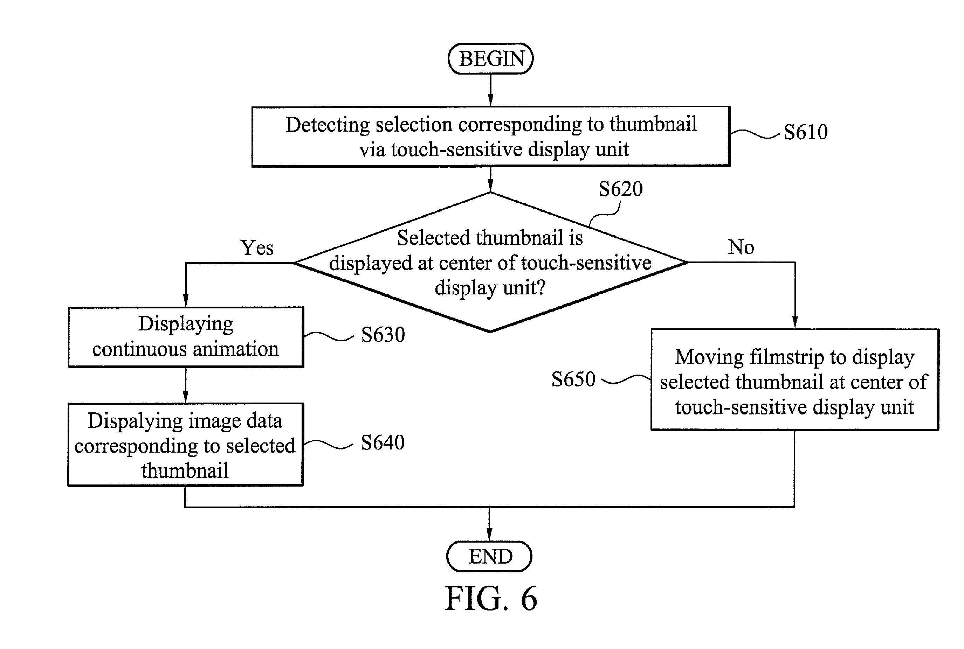

Fig. 6 is a flowchart of an embodiment of a method for selecting thumbnails of the invention.

In step S610, a selection corresponding to one of the thumbnails in the filmstrip is detected via the touch-sensitive display unit. In step S620, it is determined whether the selected thumbnail is displayed at the center of the touch-sensitive display unit. When the selected thumbnail is displayed at the center of the touch-sensitive display unit (Yes in step S620), in step S630, a continuous animation is displayed to show the selected thumbnail being gradually enlarged, and in step S640, the image data corresponding to the selected thumbnail is completely displayed in a visible area of the touch-sensitive display unit. It is understood that, in some embodiments, the image data has a size of the visible area. When the selected thumbnail is not displayed at the center of the touch-sensitive display unit (No in step S620). In step S650, the filmstrip is moved, such that the selected thumbnail is displayed at the center of the touch-sensitive display unit.

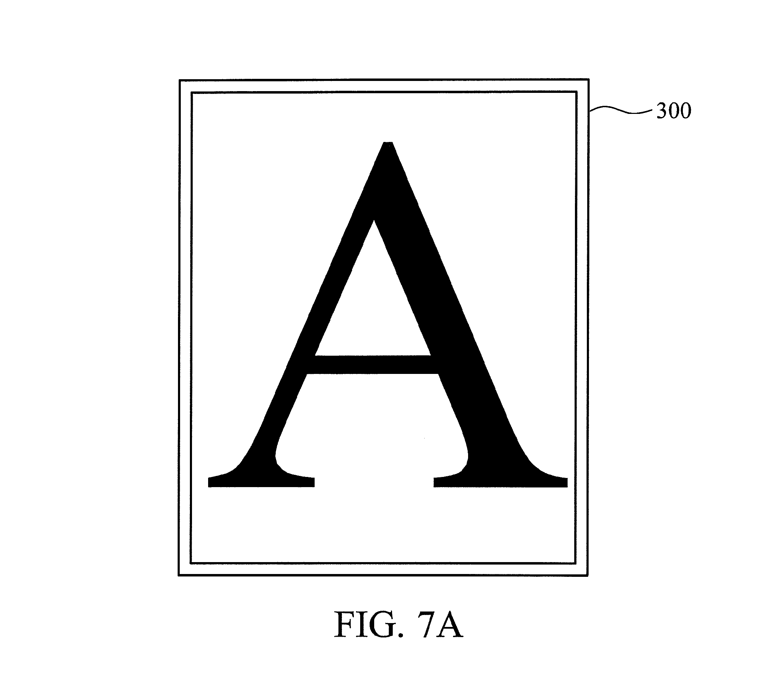

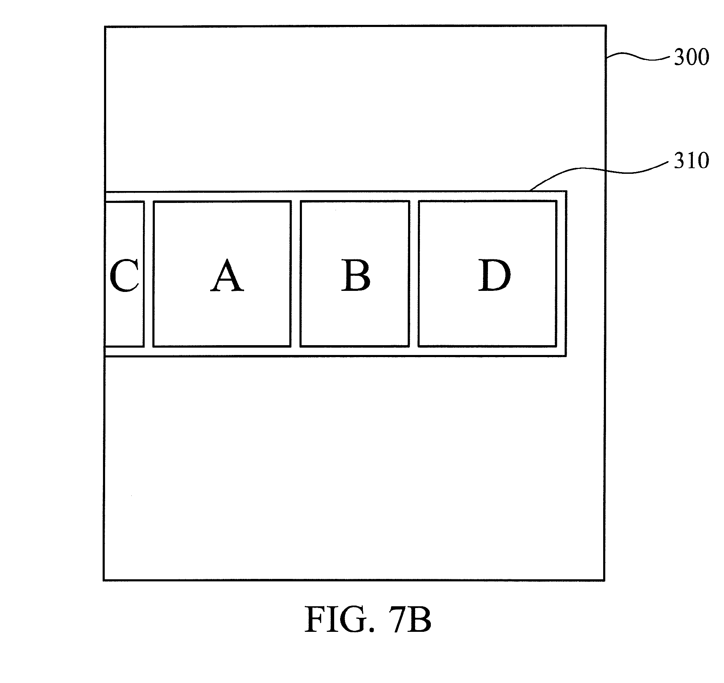

For example, when thumbnail A in Fig. 3 is selected, since thumbnail A is originally displayed at the center of the touch-sensitive display unit, thumbnail A is gradually enlarged, and the image data corresponding to the thumbnail A is completely displayed in the touch-sensitive display unit, as shown in Fig. 7A. Additionally, when thumbnail B in Fig. 3 is selected, since thumbnail B is not originally displayed at the center of the touch-sensitive display unit, the filmstrip is moved, such that thumbnail B is displayed at the center of the touch-sensitive display unit, as shown in Fig. 7B.

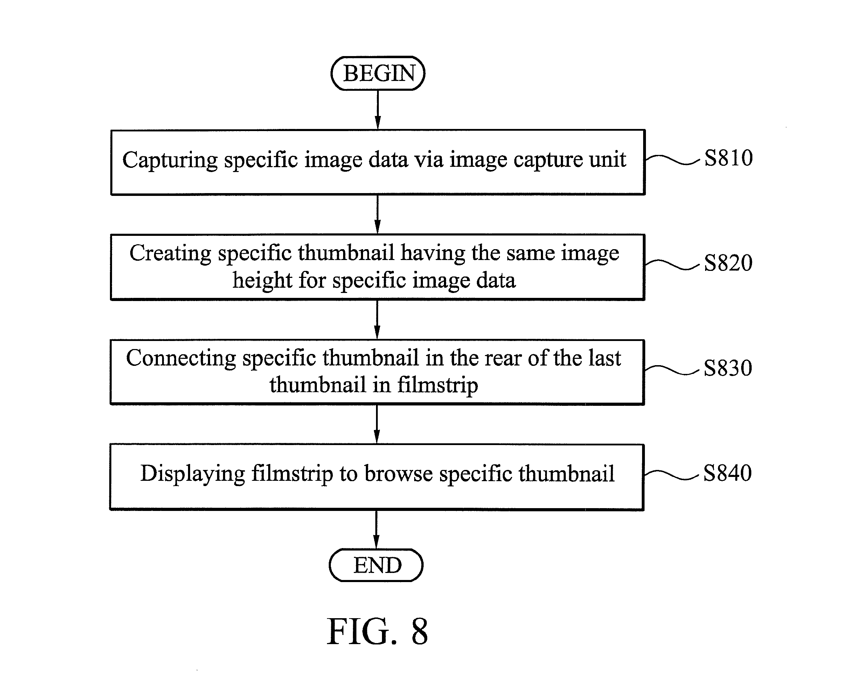

Fig. 8 is a flowchart of an embodiment of a method for capturing and browsing image data of the invention. In this embodiment, the electronic device may have an image capture unit (not shown), thus providing the image capture capability to the electronic device.

In step S810, a specific image data is captured via an image capture unit. After the specific image data is captured, in step S820, a specific thumbnail is created for the specific image data. The specific thumbnail and the respective thumbnails have the same image height. Then, in step S830, the specific thumbnail is connected after the last thumbnail in the filmstrip, and in step S840, the filmstrip is displayed in the touch-sensitive display unit, such that the thumbnails corresponding to the image data can be browsed. It is understood that, in some embodiments, after the specific image data is captured, a continuous animation can be also displayed to show the specific image data to be gradually reduced, and connected to the last thumbnail in the filmstrip.

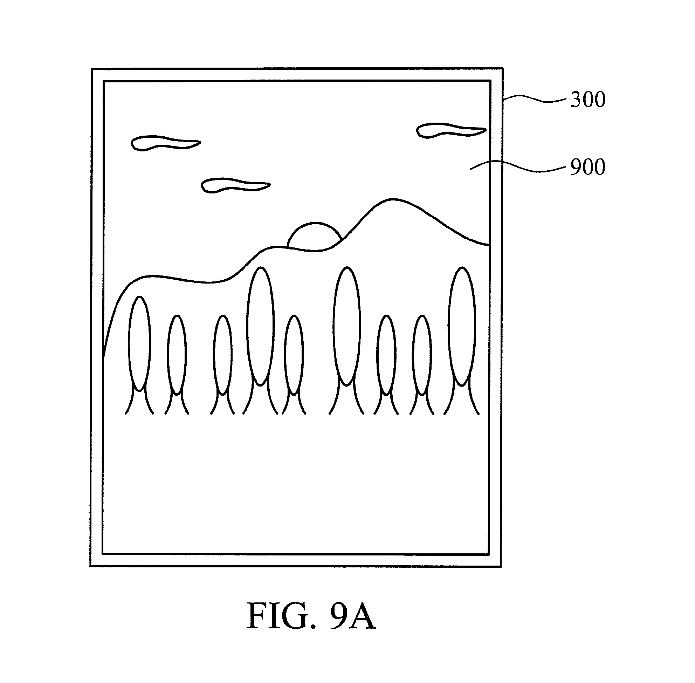

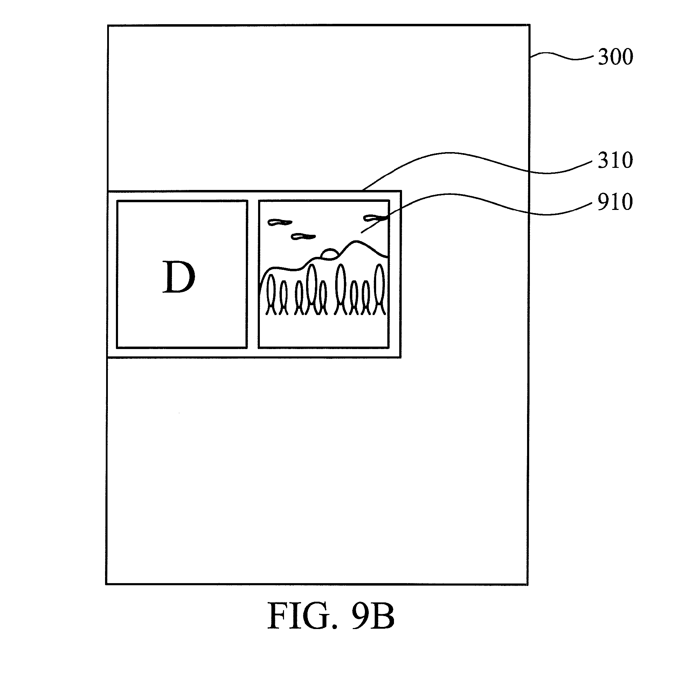

For example, a scene image data 900 can be previewed using the touch-sensitive display unit 300 of the electronic device, and captured via the image capture unit of the electronic device, as shown in Fig. 9A. After the scene image data 900 is captured, a scene thumbnail 910 corresponding to the scene image data 900 is created according to the original aspect ratio of the scene image data 900, connected to the end of the filmstrip 310, and displayed in the touch-sensitive display unit 300, as shown in Fig. 9B.

It is understood that, in the above embodiments, a filmstrip is created using the thumbnails for browsing. However, in some embodiments, several thumbnails can be directly connected, and the connected thumbnails can be directly displayed in the touch-sensitive display unit 300 for browsing.

Therefore, the methods for browsing image data and systems using the same can automatically create thumbnails with the same height for various image data, and directly connect the thumbnails or use the thumbnails to create a filmstrip, thus to browse the image data in various manners.
Methods for browsing image data and systems using the same, or certain aspects or portions thereof, may take the form of a program code (i.e., executable instructions) embodied in tangible media, such as floppy diskettes, CD-ROMS, hard drives, or any other machine-readable storage medium, wherein, when the program code is loaded into and executed by a machine, such as a computer, the machine thereby becomes an apparatus for practicing the methods. The methods may also be embodied in the form of a program code transmitted over some transmission medium, such as electrical wiring or cabling, through fiber optics, or via any other form of transmission, wherein, when the program code is received and loaded into and executed by a machine, such as a computer, the machine becomes an apparatus for practicing the disclosed methods. When implemented on a general-purpose processor, the program code combines with the processor to provide a unique apparatus that operates analogously to application specific logic circuits.

In summary there are provided methods for browsing image data and systems using the same. First, a plurality of image data is provided. A thumbnail is created for each of the image data, wherein the respective thumbnails have the same image height. Then, a filmstrip is created according to the thumbnails, and all or a part of the filmstrip is displayed in a touch-sensitive display unit to let users browse the thumbnails corresponding to the image data.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalents.

## Claims

1. A method for browsing image data for use in an electronic device, comprising:
providing a plurality of image data;
creating a thumbnail for each of the image data, wherein the respective thumbnails have the same image height;
creating a filmstrip according to the thumbnails; and
displaying all or a part of the filmstrip in a touch-sensitive display unit, such that the thumbnails corresponding to the image data are browsed.

2. The method of claim 1, further comprising:
detecting a selection corresponding to one of the thumbnails in the filmstrip via the touch-sensitive display unit; and
when the selected thumbnail is displayed at the center of the touch-sensitive display unit, displaying the image data corresponding to the selected thumbnail in the touch-sensitive display unit.

3. The method of claim 2, wherein the image data corresponding to the selected thumbnail is completely displayed in a visible area of the touch-sensitive display unit.

4. The method of claim 3, further comprising after the thumbnail is selected, displaying a continuous animation to show the selected thumbnail being gradually enlarged as the image data having a size of the visible area.

5. The method of one of the preceding claims, further comprising when the selected thumbnail is not displayed at the center of the touch-sensitive display unit, moving the filmstrip, such that the selected thumbnail is displayed at the center of the touch-sensitive display unit.

6. The method of one of the preceding claims, further comprising:
detecting a movement of an object near or on the touch-sensitive display unit; and
in response to the movement, moving the filmstrip, such that one of the thumbnails is displayed at the center of the touch-sensitive display unit.

7. The method of claim 6, further comprising:
calculating a distance from the center of each of the thumbnails of the filmstrip to the center of the touch-sensitive display unit; and
displaying the thumbnail having the shortest distance from its center to the center of the touch-sensitive display unit at the center of the touch-sensitive display unit.

8. The method of one of the preceding claims, further comprising:
capturing a specific image data via an image capture unit;
creating a specific thumbnail for the specific image data, wherein the specific thumbnail and the respective thumbnails have the same image height; and
connecting the specific thumbnail in the rear of the last thumbnail in the filmstrip.

9. The method of claim 8, further comprising after the specific image data is captured, displaying a continuous animation to show the captured specific image data being gradually reduced, and connected in the rear of the last thumbnail in the filmstrip.

10. A system for browsing image data for use in an electronic device, comprising:
a storage unit comprising a plurality of image data;
a touch-sensitive display unit; and
a processing unit creating a thumbnail for each of the image data, wherein the respective thumbnails have the same image height, creating a filmstrip according to the thumbnails, and displaying all or a part of the filmstrip in a touch-sensitive display unit, such that the thumbnails corresponding to the image data are browsed.

11. The system of claim 10, wherein the processing unit further detects a selection corresponding to one of the thumbnails in the filmstrip via the touch-sensitive display unit, and when the selected thumbnail is displayed at the center of the touch-sensitive display unit, displays the image data corresponding to the selected thumbnail in the touch-sensitive display unit.

12. The system of claim 11, wherein the image data corresponding to the selected thumbnail is completely displayed in a visible area of the touch-sensitive display unit.

13. The system of claim 12, wherein after the thumbnail is selected, the processing unit further displays a continuous animation to show the selected thumbnail being gradually enlarged as the image data having a size of the visible area.

14. The system of one of claims 10 to 13, wherein when the selected thumbnail is not displayed at the center of the touch-sensitive display unit, the processing unit further moves the filmstrip, such that the selected thumbnail is displayed at the center of the touch-sensitive display unit.

15. The system of one of claims 11 to 14, wherein the processing unit further detects a movement of an object near or on the touch-sensitive display unit, and in response to the movement, moves the filmstrip, such that one of the thumbnails is displayed at the center of the touch-sensitive display unit.
